# EUROPEAN PATENT SPECIFICATION

(11) **EP 4 087 369 B1**
(45) Date of publication and mention of the grant of the patent: **16.04.2025**
(21) Application number: 22171152.6
(22) Date of filing: 02.05.2022
(51) Int. Cl.: H04W 88/14, H04L 47/00, H04L 47/24, H04L 47/2425, H04W 92/02

(54) **METHOD AND APPARATUS FOR SURVIVAL TIME HANDLING FOR TIME SENSITIVE CONNECTIONS**
VERFAHREN UND VORRICHTUNG ZUR HANDHABUNG DER ÜBERLEBENSZEIT FÜR ZEITEMPFINDLICHE VERBINDUNGEN
PROCÉDÉ ET APPAREIL DE GESTION DU TEMPS DE SURVIE POUR DES CONNEXIONS SENSIBLES AU TEMPS

(30) Priority: 03.05.2021 IN 202121020229; 28.04.2022 US 202217731324
(43) Date of publication of application: 09.11.2022
(73) Proprietor: Mavenir Systems, Inc., Richardson, TX 75081 (US)
(72) Inventor: MISHRA, Abhishek, 562125 Bangalore (IN); PADLIKAR, Vipin, 560035 Bangalore (IN); GUPTA, Rohit, 560035 Bangalore (IN); JINDAL, Tamanna, McKinney 75070 (US)
(74) Representative: Studio Torta S.p.A.

(56) References cited:
- EP-A1- 4 030 650
- WO-A1-2021/002873
- WO-A1-2021/029862
- WO-A1-2021/056589
- WO-A1-2021/078454
- US-A1- 2020 259 896
- UNKNOWN: "3GPP TS 23.501 V16.5.1", 3 August 2020 (2020-08-03), pages 1 - 400, XP055789822, Retrieved from the Internet <URL:https://portal.3gpp.org/desktopmodules/Specifications/SpecificationDetails.aspx?specificationId=3144> [retrieved on 20210325]
- 3GPP: "3GPP TS 23.502 V16.4.0 - 3rd Generation Partnership Project; Technical Specification Group Services and System Aspects; Procedures for the 5G System (5GS); Stage 2 (Release 16)", 1 March 2020 (2020-03-01), pages 1 - 576, XP055774249, Retrieved from the Internet <URL:www.3gpp.com> [retrieved on 20210209]
- "LTE; 5G; Interface between the Control Plane and the User Plane nodes (3GPP TS 29.244 version 16.7.0 Release 16)", vol. 3GPP CT, no. V16.7.0, 15 April 2021 (2021-04-15), pages 1 - 326, XP014396679, Retrieved from the Internet <URL:http://www.etsi.org/deliver/etsi_ts/129200_129299/129244/16.07.00_60/ts_129244v160700p.pdf> [retrieved on 20210415]

## Description

### BACKGROUND OF THE DISCLOSURE

### 1. Field of the Disclosure

The present disclosure relates to a method for Time Sensitive Network (TSN) operation, in particular for 5G networks, and still more particularly to a method for TSN operation involving a 5G network.

### 2. Description of the Related Art

TSN operation is the IEEE 802.1Q-defined technology for ensuring information delivery between two points in a fixed and predictable amount of time. TSN technology is an Ethernet standard, not an Internet Protocol (IP) standard. Because TSN technology is focused on time, one of the requirements for the networking devices implementing TSN technology, e.g., bridges and end devices, is to share a uniform sense of time, and Precision Time Protocol (PTP) is used to maintain a uniform sense of time. The forwarding decisions made by the TSN bridges (also referred to as Ethernet switches) use the Ethernet header contents, not the IP address. Because the payloads of the Ethernet frames can be anything (and are not limited to IP), TSN technology can be used in any environment, e.g., used to carry an industrial application payload.

When mobile and/or wireless networks are used for TSN, User Plane Function (UPF) becomes an important entity through which the TSN data has to be transmitted. 3rd Generation Partnership Project (3GPP) has proposed an architecture (3GPP TS 23.501v16.2.0: "System Architecture for the 5G System," (2020)) which enables the 5G core network to be used for such services.

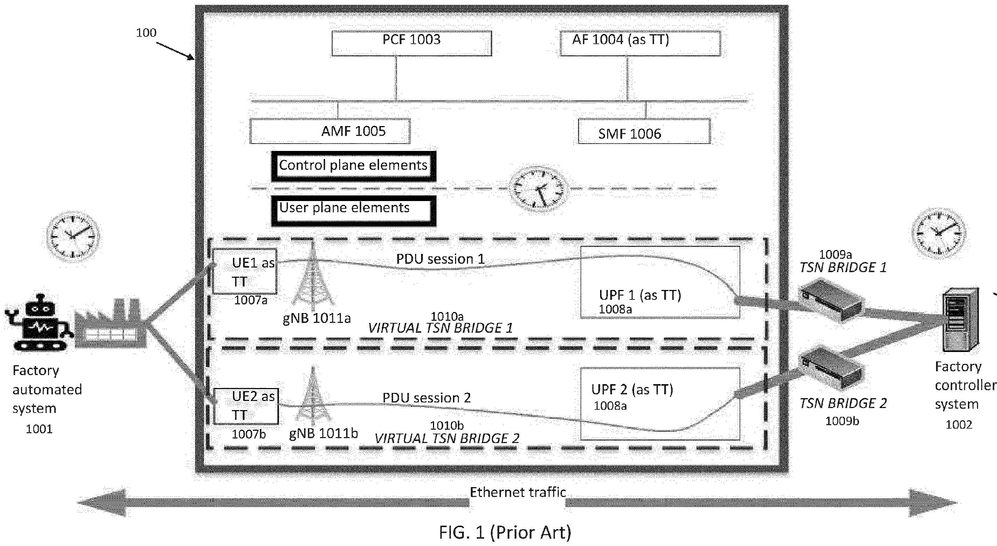

FIG. 1 shows a TSN in which portions of 5G network 100 are shown as bridges (i.e., virtual TSN bridge 1 1010a for a protocol data unit (PDU) session 1, and virtual TSN bridge 2 1010b for a PDU session 2), controlling the factory automated system 1001 and factory controller 1002 for the ethernet traffic. The TSN shown in FIG. 1 further includes the following: policy control function (PCF) 1003; application function (AF) 1004, which acts as a TSN translator (TT) in this example; Access and Mobility Management Function (AMF) 1005; session management function (SMF) 1006; user equipment 1 (UE 1) 1007a (acting as a TT); UE2 1007b (acting as a TT); gNB 1 1011a; gNB 2 1011b; user plane function 1 (UPF 1) 1008a (acting as a TT); UPF 2 1008b (acting as a TT); TSN bridge 1 1009a; and TSN bridge 2 1009b. PCF 1003, AF 1004, AMF 1005 and SMF 1006 are control plane (CP) elements; the elements shown below the CP elements in FIG. 1 are user plane (UP) elements. The TSN shown in FIG. 1 is unsynchronized, i.e., the factory automated system 1001 and the bridges (e.g., 1009a, 1009b, 1010a, 1010b) follow different time drifts. The 3GPP has defined procedures (e.g., 3GPP TS 23.501v16.2.0: "System Architecture for the 5G System," (2020); 3GPP TS 23.502v16.2.0:"Procedures for the 5G System," (2020)) for making the time synchronized between the bridges and time-sensitive devices and/or networks connected via TT.

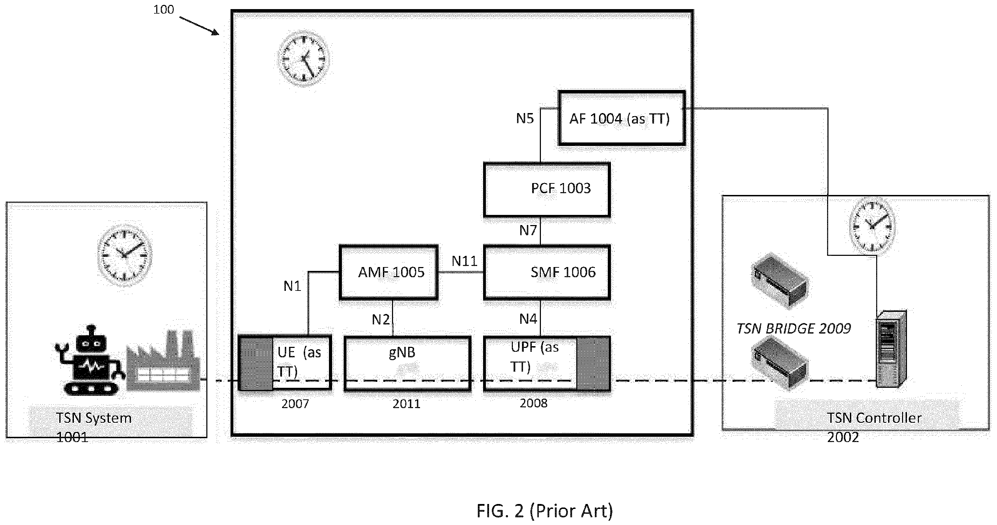

FIG. 2 shows the CP and UP interworking in the 5G network 100, e.g., using interfaces N1, N2, N4, N5, N7 and N11. The TSN shown in FIG. 2 is unsynchronized. The TSN controller 2002 connects to the AF 1004 to inform about the time details and time drifts required to support the communication. The AF 1004, using the PCF 1003, interfaces with the SMF 1006 to installs rules at the UPF 2008 with the time-related information, so that the UP can be synchronized with the TSN.

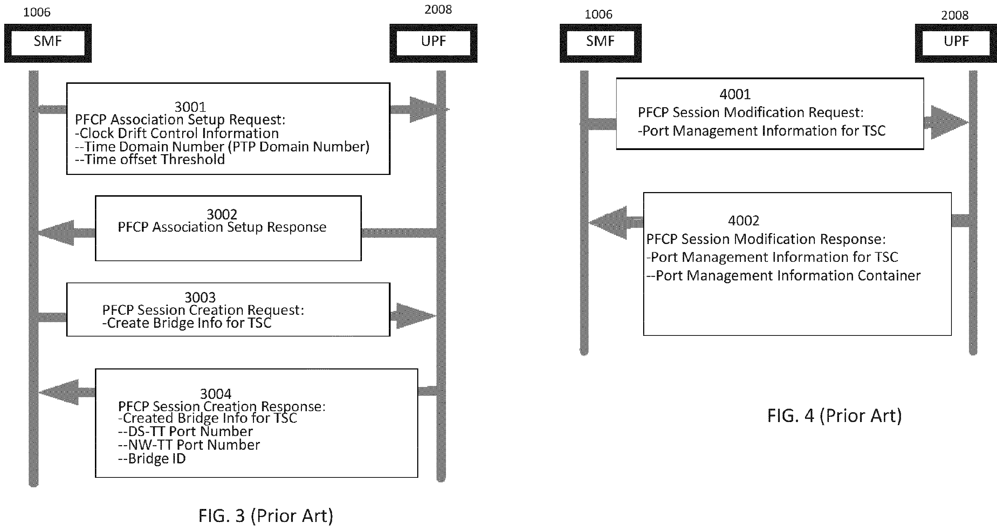

FIG. 3 shows the call flow for SMF 1006 provisioning the relevant rules at the UPF 2008 for clock synchronization and TT-port creation, e.g., as per 3GPP protocols defined in 3GPP TS 29.244v16.3.1:"Interface between the Control Plane and the User Plane Nodes," (2020) and 3GPP TS 24.519 v16.1.0, "Time-Sensitive Networking (TSN) Application Function (AF) to Device-Side TSN Translator (DS-TT) and Network-Side TSN Translator (NW-TT) Protocol Aspects," (2020). In block 3001, packet forwarding control protocol (PFCP) association setup request is sent from SMF 1006 to UPF 2008, which Setup Request includes clock drift control information, e.g., time domain number (precision time protocol (PTP) domain number), and time offset threshold. In block 3002, PFCP association setup response is sent from UPF 2008 to SMF 1006. In block 3003, PFCP session creation request is sent from SMF 1006 to UPF 2008, which creation request includes "create bridge" information for time sensitive connection (TSC). In block 3004, PFCP session creation response is sent from UPF 2008 to SMF 1006, which creation response includes created bridge information for TSC, e.g., device-side TSN translator (DS-TT) port number; network-side TSN translator (NW-TT) port number; and bridge ID.

The 3GPP has also defined TSN port management procedures, e.g., the CP can ask for the TSN port information, using the PFCP modification procedures. FIG. 4 shows one such call flow, e.g., SMF 1006 doing the port management for the TSN bridge, based on 3GPP specification (3GPP TS 29.244v16.3.1: "Interface between the Control Plane and the User Plane Nodes," (2020)). In block 4001, PFCP session modification request is sent from SMF 1006 to UPF 2008, which modification request includes port management information (request for the TSN port information) for TSC. In block 4002, PFCP session modification response is sent from UPF 2008 to SMF 1006, which modification response includes port management information (requested TSN port information) for TSC and port management information container for TSC.

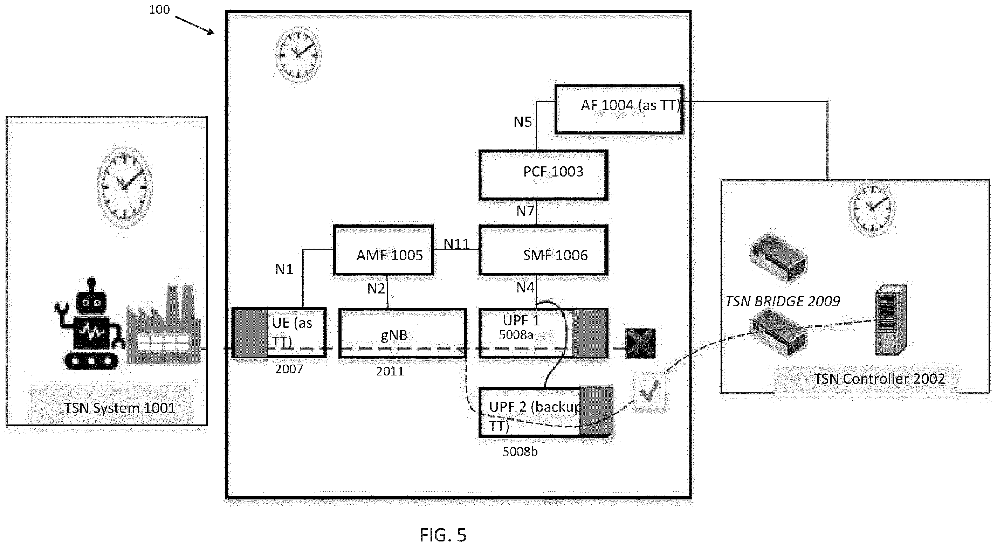

The ethernet connections in a TSN may fluctuate (i.e., the connection goes down and subsequently comes back up) at certain times between the UPF (TT) and the TSN Controller, in which cases the UP connection between the UPF (TT) and TSN will be subjected to a reconnection attempt involving a reset of the UP connection. In the above scenario involving a reset of the UP connection, there are times when the data traffic stops flowing in the UP (e.g., during a reset and/or during down time), but there is no audit mechanism at the UPF that can notify the CP about the data traffic stoppage. In addition, the UPF (TT) may trigger high availability (HA) procedures involving implementation of a failover, i.e., automatically switch to a backup system component in case of a failure of a primary system component. FIG. 5 shows one such example in which the connection is switched from UPF 1 5008a (TT) to UPF 2 5008b (backup TT). The TSN shown in FIG. 5 is synchronized.

In both of the above situations (data traffic stoppage associated with a reset of the UP connection, and failover), miscalculation of "survival time" occurs. As defined in 3GPP TS 22.104 v 16.3.0, "Service requirements for cyber-physical control applications in vertical domains," (2019), "survival time" refers to the time period that a communication service may continue without meeting an application's requirement before the communication service is deemed to be in an unavailable state. In other words, the communication service is considered unavailable to the application when an expected message is not received by the application after application's survival time expires.

Document 3GPP: "3GPP TS 23.502 V16.4.0 - 3rd Generation Partnership Project; Technical specification Group Services and System Aspects; Procedures for the 5G System (5GS); stage 2 (Release 16)", 1 March 2020, pages 1-576, defines the Stage 2 procedures and Network Function services for the 5G system architecture which is described in the TS 23.501 and for the policy and charging control framework which is described in TS 23.503. however, the above mentioned issues are not solved.

Accordingly, there is a need for a method for ensuring correct calculation of survival time, e.g., in scenarios involving a failover and/or data traffic stoppage due to reset of UP connection.

### SUMMARY OF THE DISCLOSURE

The present invention relates to a method for time sensitive network (TSN) operation according to claim 1.

The following aspects summarize the present disclosure and are not necessarily part of the claimed invention. According to an example according to the present disclosure, a method for time sensitive network (TSN) operation includes: in the case of data traffic stoppage in a communication channel of TSN due to at least one of down time of a user plane (UP) connection and a reset of the UP connection, performing the following: generating, by a user plane function (UPF), an audit report about the at least one of the down time and the reset; sending, by the UPF, the audit report to a first element in control plane (CP), without waiting for communication from the CP; and determining, by one of the first element or a second element in the CP, survival time of the communication channel. The audit report is sent along with a report type indicating the down time of the UP connection due to connection fluctuation or a switch-over of the UP connection from a primary UPF to a back-up UPF.

According to an example according to the present disclosure, the audit report is sent along with a report type indicating one of i) down time of the UP connection due to connection fluctuation, or ii) down time of the UP connection due to a switch-over of the UP connection from a primary user plane function (UPF) to a back-up UPF.

According to an example according to the present disclosure, in the case the down time of the UP connection is due to the switch-over of the UP connection from the primary user plane function (UPF) to the back-up UPF, the audit report is sent by the back-up UPF.

According to an example according to the present disclosure, in the case the report type indicates down time of the UP connection due to connection fluctuation, the audit report includes at least one of the following information: operation status, IP address: display name; interface name; virtual routing and forwards (VRF); virtual local area network (VLAN); physical address; protocol type; start time for TSN session; previous down time; and duration of down time.

According to an example according to the present disclosure, in the case the report type indicates down time of the UP connection due to the switch-over of the UP connection from the primary user plane function (UPF) to the back-up UPF, the audit report includes at least one of the following information: operation status, IP address: display name; interface name; virtual routing and forwards (VRF); virtual local area network (VLAN); old physical address; new physical address; protocol type; start time for TSN session; previous down time; and duration of down time.

### BRIEF DESCRIPTION OF THE FIGURES

FIG. 1 illustrates an example TSN.
FIG. 2 illustrates CP and UP interworking in a 5G network.
FIG. 3 illustrates an example call flow for SMF provisioning the relevant rules at UPF for clock synchronization and TT-port creation.
FIG. 4 illustrates an example call flow between a UPF and an SMF doing port management for a TSN bridge.
FIG. 5 shows an example in which a TSN connection is switched to a back-up UPF.
FIG. 6 illustrates a call flow for an example embodiment of a method according to the present disclosure.
FIG. 7 illustrates a call flow for yet another example embodiment of a method according to the present disclosure.

### DETAILED DESCRIPTION

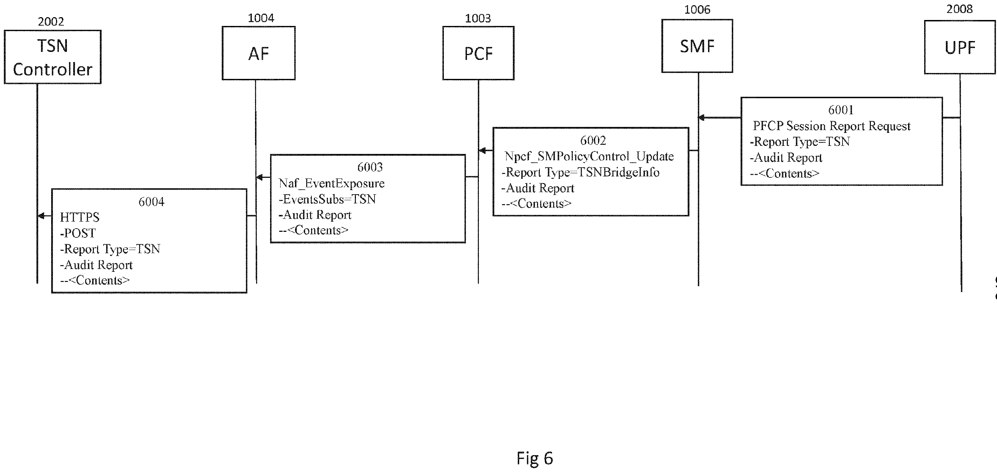

In an example embodiment of a method according to the present disclosure, in the event of experiencing data traffic stoppage in TSN due to down time and/or a reset of the UP connection, the UP generates and sends an audit report to the CP (e.g., SMF 1006 in the CP), without waiting for any communication from the CP, as shown in FIG. 6. In block 6001 in FIG. 6, UPF 2008 sends to SMF 1006 a "PFCP Session Report Request" message including i) Report Type = TSN, and ii) an Audit Report having specified contents. The contents of an Audit Report can include the following fields:
Operation Status: <up | down >
IP Address: <ipv4address | ipv6address>
Display Name: <string>
Interface Name: <string>,
   VRF (s) : <string "," separated>
   VLAN(s): <integer "," separated>
Physical Address: <macAddress>
(protocol) Type: <IP | Ethernet>
Start Time for TSN session for a specific connection: <Date Time >
Previous Down Time: <Date Time >
Duration of Down Time: <milliseconds>

As an example, the following could be included in the Audit Report:
Operation Status: up
IP Address: [10.10.1.2]
Display Name: UPF[TT]
Interface Name: eth5
   VRF: VRF1
   VLAN: 501
Physical Address: 10-65-30-12-F5-1B
(protocol) Type: Ethernet
Start Time for TSN session for a specific connection: 7/16/2020, 12:39:57 PM
Previous Down Time: 7/17/2020, 19:44:50 PM
Duration of Down Time: 25000 ms

Next, as shown in block 6002 in FIG. 6, SMF 1006 sends to PCF 1003 an update, NPCF Session Management Policy Control Update (Npcf_SMPolicyControl_Update), which message includes i) Report Type = TSN Bridge Information (TSNBridgeInfo), and ii) the Audit Report received from UPF 2008. In block 6003, PCF 1003 sends to AF 1004 a Network Application Function (NAF) Event Exposure message including: i) Events Subscription = TSN, and ii) the Audit Report received from SMF 1006. In block 6004, AF 1004 sends to TSN controller 2002 a Hypertext Transfer Protocol Secure (HTTPS) POST request message including i) Report Type = TSN, and ii) the Audit Report received from PCF 1003. The survival time can be computed at SMF 1006 or AF 1004.

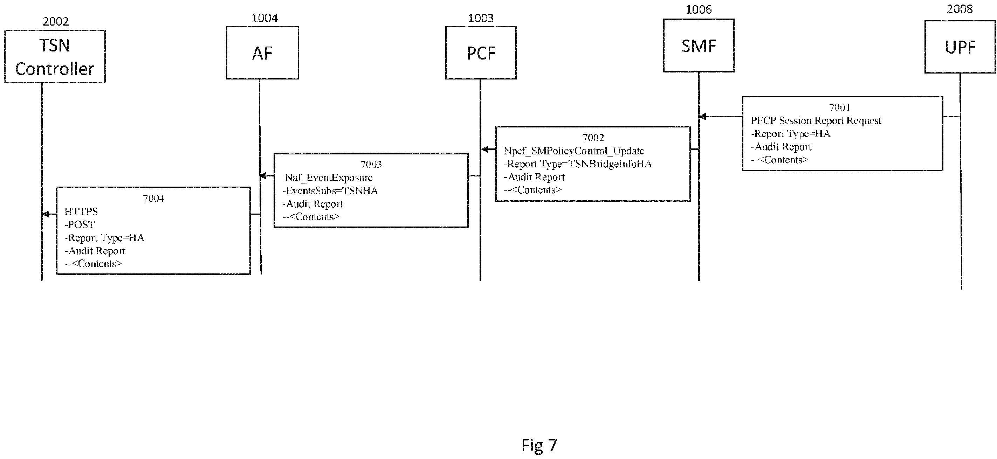

In the event of a switch-over of the connection from UPF (TT) to the UPF (Backup TT), the ethernet ports (DS-TT and NW-TT) created at the UPF(TT) are also switched, which results in a temporary pause of the connection with the TSN System. Because the CP is unaware of the connection reset, resulting loss of synchronization occurs among the TSN devices. In order to overcome this problem, in an example embodiment of a method according to the present disclosure, in the event of a switch-over, the UP notifies the CP about the HA action (i.e., the switch-over of the connection), so that the AF (working as TT) can inform the TSN controller about the time gaps. In block 7001 in FIG. 7, UPF 2008 (which corresponds to UPF 2 serving as the back-up TT shown in FIG. 5) sends to SMF 1006 a "PFCP Session Report Request" including i) Report Type = HA, and ii) an Audit Report having specified contents. The contents of an Audit Report can include the following fields:
Operation Status: <up | down >
IP Address: <ipv4address | ipv6address>
Display Name: <string>
Interface Name: <string>,
   VRF (s) : <string "," separated>
   VLAN(s): <integer "," separated>
Old Physical Address: <macAddress>
New Physical Address: <macAddress>
(protocol) Type: <IP | Ethernet>
Start Time for TSN session for a specific connection: <Date Time >
Previous Down Time: <Date Time >
Duration of Down Time: <milliseconds>

As an example, the following could be included in the Audit Report:
Operation Status: up
IP Address: [10.10.1.2]
Display Name: UPF[TT]
Interface Name: eth5
   VRF: VRF1
   VLAN: 501
Old Physical Address: 10-65-30-12-F5-1B
New Physical Address: 20-65-30-12-F7-1C
(protocol) Type: Ethernet
Start Time for TSN session for a specific connection: 7/16/2020, 12:39:57 PM
Previous Down Time: 7/17/2020, 19:44:50 PM
Duration of Down Time: 38000 ms

Next, as shown in block 7002 in FIG. 7, SMF 1006 sends to PCF 1003 an update, NPCF Session Management Policy Control Update (Npcf_SMPolicyControl_Update), which message includes i) Report Type = TSN Bridge Information HA (TSNBridgeInfoHA), and ii) the Audit Report received from UPF 2008. In block 7003, PCF 1003 sends to AF 1004 a Network Application Function (NAF) Event Exposure message including: i) Events Subscription = TSNHA, and ii) the Audit Report received from SMF 1006. In block 7004, AF 1004 sends to TSN controller 2002 a Hypertext Transfer Protocol Secure (HTTPS) POST request message including i) Report Type = HA, and ii) the Audit Report received from PCF 1003. The survival time can be computed at SMF 1006 or AF 1004.

The example embodiments of the method according to the present disclosure provide the advantage of enabling the CP to be informed of TSN data traffic stoppage, e.g., due to down time and/or a reset of the UP connection. By having the UP notify the SMF in the CP about TSN data-traffic-stoppage events, the network operator is able to obtain the correct timings during which the UP was unable to handle the data traffic on the communication channel, i.e., the path between the Device-Side TSN Translator (DS-TT), e.g., UE, and Network-Side TSN Translator (NW-TT), e.g., UPF. The notification from the UP enables correct computing of the survival time of the communication channel.

Although the example method according to the present disclosure has been described in the context of 5G network, the method according to the present disclosure is not limited to 5G, e.g., the method can be applied to 4G network.

As a summary, several examples of the method according to the present disclosure are provided.

### GLOSSARY OF TERMS

3GPP: Third generation partnership project
5G: 5th Generation
5GC: 5G Core Network
5GS: 5G System
AF: Application Function
AMF: Access and Mobility Management Function
CP: Control Plane
DL: Downlink
DN: Data Network
DNN: Data Network Name
DS-TT: Device-Side TSN Translator
eNB: Evolved Node B
FH: Fronthaul
FFT: Fast Fourier Transform
gNB: Next Generation Node B
HA: High availability
iFFT: inverse Fast Fourier Transform
MAC address: Media Access Control address
NW-TT: Network-side TSN Translator
PCF: Policy Control Function
PDU session: Protocol Data Unit session
PFCP: Packet Forwarding Control Protocol
PPP Point-to-Point Protocol
PTP: Precision Time Protocol
SMF: Session Management Function
TSC: Time Sensitive Connection
TSN: Time Sensitive Network
TT: TSN Translator
UE: User Equipment
UL: Uplink
UP: User Plane
UPF: User Plane Function
VLAN: Virtual Local Area Network
VRF: Virtual routing and forwarding

## Claims

1. A method for time sensitive network, TSN, operation, comprising:
in the case of data traffic stoppage in a communication channel of TSN due to at least one of down time of a user plane, UP, connection and a reset of the UP connection, performing the following:
generating, by a user plane function, UPF, an audit report about the at least one of the down time and the reset;
sending, by the UPF, the audit report to a first element (1006) in control plane, CP, without waiting for any communication from the CP,
**characterized in that**:
the first element (1006) in the CP is a session management function, SMF;
a second element (1004) in the CP is an application function, AF;
the method further comprising the steps of:
sending the audit report along with a report type indicating one of i) down time of the UP connection due to connection fluctuation, or ii) down time of the UP connection due to a switch-over of the UP connection from a primary user plane function, UPF, (2008) to a back-up UPF; and
determining, by one of the first element or the second element (1004) in the CP whether the down time of the UP connection exceeds a survival time of the communication channel,
wherein:
in the case the down time of the UP connection is due to the switch-over of the UP connection from the primary user plane function, UPF, to the back-up UPF, the audit report is sent by the back-up UPF;
in the case the report type indicates down time of the UP connection due to connection fluctuation, the audit report includes at least one of the following information: operation status, IP address: display name; interface name; virtual routing and forwards, VRF; virtual local area network, VLAN; physical address; protocol type; start time for TSN session; previous down time; and duration of down time;
in the case the report type indicates down time of the UP connection due to the switch-over of the UP connection from the primary user plane function, UPF, to the back-up UPF, the audit report includes at least one of the following information: operation status, IP address: display name; interface name; virtual routing and forwards, VRF; virtual local area network, VLAN; old physical address; new physical address; protocol type; start time for TSN session; previous down time; and duration of down time.

2. The method according to claim 1, further comprising:
sending, by the SMF to a policy control function, PCF, an update message including the audit report received from the UPF.

3. The method of claim 2, further comprising:
sending, by the PCF to an application function, AF, a message including the audit report received from the SMF.

4. The method of claim 3, further comprising:
sending, by the AF to a TSN controller, a hypertext transfer protocol secure, HTTPS, POST request message including the audit report received from the PCF.

## Patentansprüche

1. Verfahren für den Time-sensitive Network (TSN)-Betrieb, umfassend:
im Fall einer Unterbrechung des Datenverkehrs in einem Kommunikationskanal des TSN aufgrund mindestens eines aus einer Ausfallzeit einer Benutzerebene (user plane, UP)-Verbindung und eines Neustarts der UP-Verbindung
Durchführen von Folgendem:
Erstellen, durch eine Benutzerebenefunktion (user plane function, UPF), eines Prüfberichts über das mindestens eine aus der Ausfallzeit und dem Neustart,
Senden, durch die UPF, des Prüfberichts an ein erstes Element (1006) in der Kontrollebene (CP), ohne auf irgendeine Kommunikation von der CP zu warten,
**dadurch gekennzeichnet, dass**:
das erste Element (1006) in der CP eine Sitzungsmanagementfunktion (SMF) ist,
ein zweites Element (1004) in der CP eine Anwendungsfunktion (AF) ist,
wobei das Verfahren ferner die folgenden Schritte umfasst:
Senden des Prüfberichts zusammen mit einem Berichtstyp, der auf eines aus i) einer Ausfallzeit der UP-Verbindung aufgrund von Verbindungsfluktuation oder ii) einer Ausfallzeit der UP-Verbindung aufgrund eines Switchover der UP-Verbindung von einer primären Benutzerebenefunktion (UPF) (2008) an eine Backup-UPF hinweist, und
Ermitteln, durch eines aus dem ersten Element oder dem zweiten Element (1004) in der CP, ob die Ausfallzeit der UP-Verbindung eine Überlebenszeit des Kommunikationskanals überschreitet,
wobei:
falls die Ausfallzeit der UP-Verbindung auf den Switchover der UP-Verbindung von der primären Benutzerebenefunktion (UPF) an die Backup-UPF zurückzuführen ist, der Prüfbericht von der Backup-UPF gesendet wird,
falls der Berichtstyp auf eine Ausfallzeit der UP-Verbindung aufgrund von Verbindungsfluktuation hinweist, der Prüfbericht mindestens eine der folgenden Informationen enthält: Betriebsstatus, IP-Adresse: Anzeigename, Schnittstellenname, Virtual Routing and Forwarding (VFR), virtuelles lokales Netz (VLAN), physische Adresse, Protokolltyp, Startzeitpunkt für die TSN-Sitzung, frühere Ausfallzeit und Dauer der Ausfallzeit,
falls der Berichtstyp auf eine Ausfallzeit der UP-Verbindung aufgrund des Switchover der UP-Verbindung von der primären Benutzerebenefunktion (UPF) an die Backup-UPF hinweist, der Prüfbericht mindestens eine der folgenden Informationen enthält:
Betriebsstatus, IP-Adresse: Anzeigename, Schnittstellenname, Virtual Routing and Forwarding (VFR), virtuelles lokales Netz (VLAN), alte physische Adresse, neue physische Adresse, Protokolltyp, Startzeit für die TSN-Sitzung, frühere Ausfallzeit und Dauer der Ausfallzeit.

2. Verfahren nach Anspruch 1, das ferner Folgendes umfasst:
Senden, durch die SMF an eine Policy-Kontrollfunktion (PCF), einer Aktualisierungsnachricht, die den von der UPF empfangenen Prüfbericht enthält.

3. Verfahren nach Anspruch 2, das ferner Folgendes umfasst:
Senden, durch die PCF an eine Anwendungsfunktion (AF), einer Nachricht, die den von der SMF empfangenen Prüfbericht enthält.

4. Verfahren nach Anspruch 3, das ferner Folgendes umfasst:
Senden, durch die AF an eine TSN-Steuerung, einer Hypertext Transfer Protocol Secure (HTTPS)-POST-Anfragenachricht, die den von der PCF empfangenen Prüfbericht enthält.

## Revendications

1. Procédé d'exploitation d'un réseau sensible au temps, TSN, comprenant :
en cas d'arrêt du trafic de données dans un canal de communication du TSN en raison d'au moins un parmi un temps d'arrêt d'une connexion d'un plan utilisateur, UP, et une réinitialisation de la connexion UP, la réalisation de ce qui suit :
génération, par une fonction de plan utilisateur, UPF, d'un rapport d'audit concernant le au moins un parmi le temps d'arrêt et la réinitialisation ;
envoi par l'UPF du rapport d'audit à un premier élément (1006) dans le plan de contrôle, CP, sans attendre une communication de la part du CP,
**caractérisé en ce que** :
le premier élément (1006) dans le CP est une fonction de gestion de session, SMF ;
un second élément (1004) dans le CP est une fonction d'application, AF ;
le procédé comprenant en outre les étapes de :
envoi du rapport d'audit accompagné d'un type de rapport indiquant un parmi i) un temps d'arrêt de la connexion UP en raison d'une fluctuation de la connexion, ou (ii) un temps d'arrêt de la connexion UP en raison d'un basculement de la connexion UP d'une fonction principale du plan utilisateur, UPF, (2008) à une UPF de secours ; et
détermination, par l'un parmi le premier élément ou le second élément (1004) dans le CP si le temps d'arrêt de la connexion UP dépasse un temps de survie du canal de communication,
dans lequel :
dans le cas où le temps d'arrêt de la connexion UP est causé par le basculement de la connexion UP de la fonction principale du plan utilisateur, UPF, vers l'UPF de secours, le rapport d'audit est envoyé par l'UPF de secours ;
dans le cas où le type de rapport indique un temps d'arrêt de la connexion UP en raison d'une fluctuation de la connexion, le rapport d'audit comprend au moins l'une des informations suivantes : État de fonctionnement, adresse IP : nom d'affichage ; nom d'interface ; routage et transfert virtuels, VRF ; réseau local virtuel, VLAN ; adresse physique ; type de protocole ; heure de début de la session du TSN ; temps d'arrêt précédent ; et durée du temps d'arrêt ;
dans le cas où le type de rapport indique un temps d'arrêt de la connexion UP causé par le basculement de la connexion UP de la fonction principale du plan utilisateur, UPF, vers l'UPF de secours, le rapport d'audit comprend au moions l'une des informations suivantes : État de fonctionnement, adresse IP : nom d'affichage ; nom d'interface ; routage et transfert virtuels, VRF ; réseau local virtuel, VLAN ; ancienne adresse physique ; nouvelle adresse physique ; type de protocole ; heure de début de la session du TSN ; temps d'arrêt précédent ; et durée du temps d'arrêt.

2. Procédé selon la revendication 1, comprenant en outre :
l'envoi, par la SMF à une fonction de contrôle des politiques, PCF, d'un message de mise à jour incluant le rapport d'audit reçu de l'UPF.

3. Procédé selon la revendication 2, comprenant en outre :
l'envoi, par la PCF à une fonction d'application, AF, d'un message incluant le rapport d'audit reçu de la SMF.

4. Procédé selon la revendication 3, comprenant en outre :
l'envoi par l'AF à un contrôleur du TSN, d'un message de demande POST par protocole de transfert hypertexte sécurisé, HTTPS, incluant le rapport d'audit reçu de la PCF.
